# EUROPÄISCHE PATENTSCHRIFT

(11) **EP 1 184 557 B1**
(45) Veröffentlichungstag und Bekanntmachung des Hinweises auf die Patenterteilung: **23.01.2008**
(21) Anmeldenummer: 01118575.8
(22) Anmeldetag: 02.08.2001
(51) Int. Cl.: F02D 41/30, F02D 37/02, F02D 41/24, F02P 5/15

(54) **Verfahren zum Betreiben einer Brennkraftmaschine eines Kraftfahrzeugs**
Method for operating an internal combustion engine of a motor vehicle
Procédé d'utilisation d'un moteur à combustion interne d'un véhicule automobile

(30) Priorität: 04.09.2000 DE 10043697
(43) Veröffentlichungstag der Anmeldung: 06.03.2002
(73) Patentinhaber: ROBERT BOSCH GMBH, 70442 Stuttgart (DE)
(72) Erfinder: Haegele, Hartmut, 71701 Schwieberdingen (DE); Oder, Michael, 75428 Illingen (DE)

(56) Entgegenhaltungen:
- EP-A- 0 826 880
- EP-A- 0 890 738
- EP-A- 1 081 364
- WO-A-99/49199
- DE-A- 19 937 096
- DE-C- 19 824 915

## Beschreibung

Die Erfindung betrifft ein Verfahren zum Betreiben einer Brennkraftmaschine eines Kraftfahrzeugs, bei dem Kraftstoff direkt in einen Brennraum eingebracht und mittels einer Zündeinrichtung zu einem vorgebbaren Zündzeitpunkt entflammt wird, wobei die Brennkraftmaschine in wenigstens einer ersten und einer zweiten Betriebsart betrieben wird,
wobei in der ersten Betriebsart ein Moment der Brennkraftmaschine im Wesentlichen von einer dem Brennraum zugefügten Luftmenge abhängt, wobei in der zweiten Betriebsart das Moment der Brennkraftmaschine im Wesentlichen von der in den Brennraum eingebrachten Kraftstoffmenge abhängt, wobei der Zündzeitpunkt in der ersten Betriebsart im Wesentlichen von einem aus einem ersten applizierbaren Kennfeld für die erste Betriebsart entnommenen Zündzeitpunkt abhängt und wobei der Zündzeitpunkt in der zweiten Betriebsart im Wesentlichen von einem aus einem zweiten applizierbaren Kennfeld für die zweite Betriebsart entnommenen Zündzeitpunkt abhängt. Die Erfindung betrifft ebenfalls eine entsprechende Brennkraftmaschine eines Kraftfahrzeugs, ein entsprechendes Computerprogramm mit Programmcode-Mitteln und ein entsprechendes Computerprogrammprodukt mit Programmcode-Mitteln.

### Stand der Technik

Ein derartiges Verfahren, eine derartige Brennkraftmaschine, ein entsprechendes Steuergerät, ein derartiges Computerprogramm und ein derartiges Computerprogrammprodukt sind beispielsweise von einer so genannten Benzindirekteinspritzung bekannt. Dort wird Kraftstoff in einem Homogenbetrieb während der Ansaugphase oder in einem Schichtbetrieb während der Verdichtungsphase direkt in den Brennraum der Brennkraftmaschine eingespritzt. Der Homogenbetrieb ist vorzugsweise für den Volllastbetrieb der Brennkraftmaschine vorgesehen, während der Schichtbetrieb vorzugsweise für den Leerlauf- und Teillastbetrieb geeignet ist.

Aus der nicht vorveröffentlichten EP 1 081 364 ist ein Verfahren bekannt, bei dem zwischen einem Homogen- und einem Schicht-Modus einer Brennkraftmaschine gewechselt wird, wobei das Drehmoment bei dem Wechsel so gesteuert wird, dass der beim Wechsel auftretende Drehmomentenunterschied möglichst klein wird.

Aus der DE 198 24 915 ist ein Verfahren zum Wechseln einer Betriebsart einer direkt einspritzenden Brennkraftmaschine bekannt, bei dem eine Umschaltung von einer homogenen Betriebsart zu einer Schicht-Betriebsart vorgesehen ist, wobei vor dem Umschaltzeitpunkt, während sich die Brennkraftmaschine noch in der homogenen Betriebsart befinden, der Zündwinkel rampenförmig in Richtung spät Zündung verstellt wird. Zum Umschaltzeitpunkt wird dann sprungartig auf Stationärwerte für einen Schichtladungsbetrieb umgestellt.

Aus der DE 198 28 980 A1 ist ein Steuerverfahren und eine Steuervorrichtung einer Benzinbrennkraftmaschine mit Direkteinspritzung bekannt, die in einer homogenen und in einer geschichteten Betriebsweise betrieben werden kann. Während des Übergangs von der homogenen zur Schichtbetriebsart findet entsprechend der DE 198 28 980 A1 eine Doppeleinspritzung statt. Die erste Einspritzung der Doppeleinspritzung ist eine Ansaugtakteinspritzung und die zweite Einspritzung der Doppeleinspritzung ist eine Verdichtungstakteinspritzung. Entsprechend der DE 198 28 980 A1 weist die Steuervorrichtung der Benzinbrennkraftmaschine mit Direkteinspritzung vier Kennfelder auf, in denen Einspritzzeitpunkte abgelegt sind. Dies sind Kennfelder für Einspritzzeitpunkte während des Homogenbetriebs, für Einspritzzeitpunkte bei einer Doppeleinspritzung während des Homogenbetriebs, für Einspritzzeitpunkte während des Schichtbetriebsmodus und für

Einspritzzeitpunkte bei Doppeleinspritzung im Schichtbetriebsmodus. Während der Umschaltung vom homogenen zum Schichtbetrieb wird während der Doppeleinspritzung in der Umschaltphase der Einspritzzeitpunktswert für die Teileinspritzung, die in den Ansaugtakt gespritzt wird, aus dem Kennfeld für den Homogenbetrieb entnommen. Der Wert für den Einspritzzeitpunkt der zweiten Teileinspritzung der Doppeleinspritzung, die in den Verdichtungstakt gespritzt wird, wird entsprechend aus dem Kennfeld mit den Einspritzzeitpunkten für den Schichtbetrieb entnommen. Die Kennfelder mit den Einspritzzeitpunktswerten sind in Abhängigkeit von der Kraftstoffeinspritzmenge und von der Drehzahl der Brennkraftmaschine gespeichert.

Die nicht vorveröffentlichte deutsche Patentanmeldung DE 199 25 788.4 beschreibt ein Verfahren zum Betreiben einer direkteinspritzenden Brennkraftmaschine, die in zwei Betriebsarten betrieben werden kann. Hierbei wird in einer ersten Betriebsart der Kraftstoff während der Ansaugphase und in einer zweiten Betriebsart während einer Verdichtungsphase der Kraftstoff direkt in den Brennraum eingespritzt und entzündet. Die Einspritzzeitpunkte und/oder die Zündzeitpunkte des Kraftstoffs in der zweiten Betriebsart werden in Abhängigkeit von der Drehzahl der Brennkraftmaschine und der in den Brennraum einzuspritzenden Kraftstoffmasse ermittelt. Um die Rußbildung bzw. allgemein den Schadstoffausstoß und den Kraftstoffverbrauch der Brennkraftmaschine zu optimieren, wird der zuvor bestimmte Einspritzbeginn sowie der zuvor bestimmte Zündwinkel in Abhängigkeit von Lambda, also dem Kraftstoff-Luft-Verhältnis des dem Brennraum zugeführten Gemisches, korrigiert. Die hierzu notwendigen Korrekturwerte werden einem Kennfeld entnommen und entsprechend verrechnet. Die Korrektur erfolgt dabei derart, dass der Einspritzbeginn und der Zündwinkel bei fallendem bzw. sinkendem Lambda von spät nach früh verstellt werden, so dass sich einerseits die Rußentwicklung verringert und es andererseits zu einem optimierten, also geringeren Kraftstoffverbrauch kommt. Lambda kann unmittelbar oder auch mit Hilfe von oder durch andere Betriebsgrößen der Brennkraftmaschine ermittelt oder ersetzt werden. So kann anstelle von Lambda auch der Saugrohrdruck oder die Luftmasse der angesaugten Luft oder der Drosselklappenwinkel oder dergleichen verwendet werden.

### Vorteile der Erfindung

Ein Verfahren zum Betreiben einer Brennkraftmaschine eines Kraftfahrzeugs, bei dem Kraftstoff direkt in einen Brennraum eingebracht und mittels einer Zündeinrichtung zu einem vorgebbaren Zündzeitpunkt entflammt wird, wobei die Brennkraftmaschine in wenigstens einer ersten und einer zweiten Betriebsart betrieben wird, wobei in der ersten Betriebsart ein Moment der Brennkraftmaschine im Wesentlichen von einer dem Brennraum zugeführten Luftmenge abhängt, wobei in der zweiten Betriebsart das Moment der Brennkraftmaschine im Wesentlichen von der in den Brennraum eingebrachten Kraftstoffmenge abhängt, wobei der Zündzeitpunkt in der ersten Betriebsart im Wesentlichen von einem aus einem ersten applizierbaren Kennfeld für die erste Betriebsart entnommenen Zündzeitpunkt abhängt und wobei der Zündzeitpunkt in der zweiten Betriebsart im Wesentlichen von einem aus einem zweiten applizierbaren Kennfeld für die zweite Betriebsart entnommenen Zündzeitpunkt abhängt, wobei beim Übergang von der ersten in die zweite Betriebsart der Zündzeitpunkt derart angepasst und/oder gefiltert wird, dass sich ein stetiger Übergang ergibt, wobei sich insbesondere ein stetiger Verlauf des Zündzeitpunkts in der dem eigentlichen Umschaltvorgang direkt vorgelagerten Phase ergibt, wobei der Zündzeitpunkt für die erste Betriebsart durch einen Korrekturwert angepasst wird, ist gegenüber dem Stand der Technik dadurch weitergebildet, dass der Korrekturwert im Wesentlichen von der Differenz aus einem Soll-Saugrohrdruck und einem Ist-Saugrohrdruck abhängt.

### Bei einem harten Übergang zwischen der Betriebsart

Homogen zur Betriebsart Schicht würde zwangsweise ein Zündwinkelsprung erfolgen, da der Zündwinkel in der Betriebsart Schicht nicht variabel ist, wenn das inhomogene Kraftstoff-Luft-Gemisch sicher entflammt werden soll.

Das erfindungsgemäße Verfahren weist den großen Vorteil auf, dass durch die Anpassung und/oder Filterung des Zündzeitpunkts während der Umschaltung vom Homogen- auf den Schichtbetrieb ein sonst eventuell für den Fahrer des Kraftfahrzeugs spürbarer Momentenruck vermieden wird. Ein solcher Momentenruck kann bei konventionellen, gattungsgemäßen Verfahren dadurch entstehen, dass der Zündzeitpunkt bei der Einleitung der Umschaltung von der ersten in die zweite Betriebsart springt. Dieser Fall kann insbesondere dann auftreten, wenn der Fahrer das Gaspedal schnell entlastet und von der Motorsteuerung in den Schichtbetrieb übergegangen wird, während sich der Saugrohrdruck noch nicht an den aktuellen Soll-Saugrohrdruck angenähert hat.

Erfindungsgemäß wird der Zündzeitpunkt für die erste Betriebsart durch einen Korrekturwert angepasst, wobei der Korrekturwert im Wesentlichen von der Differenz aus einem Soll-Saugrohrdruck und einem Ist-Saugrohrdruck abhängt. Durch diese erfindungsgemäßen Maßnahmen wird ein stetiger Verlauf der Zündzeitpunktswerte vor der Umschaltung vom Homogen- in den Schichtbetrieb erreicht. Insbesondere die Tatsache, dass beim schnellen Entlasten des Fahrpedals durch den Fahrer des Kraftfahrzeugs, insbesondere in der Umschaltphase vom Homogen- in den Schichtbetrieb, der Soll-Saugrohrdruck mit dem Ist-Saugrohrdruck nicht unmittelbar übereinstimmt, wird durch das erfindungsgemäße Verfahren berücksichtigt. Das Soll-Moment ist in diesem Fall kleiner als das Ist-Moment, die Soll-Füllung ist kleiner als die Ist-Füllung. Bei Freigabe des Zündwinkels zu Beginn und während der Vorbereitungsphase der Umschaltung würde es zu einem Zündwinkelsprung kommen, da die Motorelektronik/Motorsteuerung durch schlagartiges Spätverstellen des Zündwinkels versucht, das Sollmoment einzustellen. Dieser Fall wird durch die erfindungsgemäße Anpassung/Filterung des Zündwinkels und oder eines koordinierten Gesamtmoments korrigiert. Unterschiede zwischen Soll- und Ist-Füllung können hingegen nicht beseitigt werden.

Eine Brennkraftmaschine eines Kraftfahrzeugs mit wenigstens einem Brennraum, mit wenigstens einem Einspritzmittel, um Kraftstoff direkt in den Brennraum einzuspritzen, mit wenigstens einer dem Brennraum zugeordneten Zündeinrichtung, mit Mitteln, um die Brennkraftmaschine in wenigstens einer ersten und einer zweiten Betriebsart zu betreiben, mit Mitteln, um in der ersten Betriebsart ein Moment der Brennkraftmaschine zu erzeugen, das im Wesentlichen von der dem Brennraum zugeführten Luftmenge abhängt, mit Mitteln, um in der zweiten Betriebsart ein Moment der Brennkraftmaschine zu erzeugen, das im Wesentlichen von der in den Brennraum eingebrachten Kraftstoffmenge abhängt, mit Mitteln, um den Zündzeitpunkt in der ersten Betriebsart im Wesentlichen in Abhängigkeit von einem aus einem applizierbaren Kennfeld für die erste Betriebsart entnommenen Zündzeitpunkt zu bestimmen und mit Mitteln, um beim Übergang von der ersten in die zweite Betriebsart den Zündzeitpunkt derart anzupassen und/oder zu filtern, dass sich ein stetiger Übergang ergibt,
wobei der Zündzeitpunkt für die erste Betriebsart durch einen Korrekturwert angepasst wird, ist gegenüber dem Stand der Technik dadurch weitergebildet, dass der Korrekturwert (46) im Wesentlichen von der Differenz aus einem Soll-Saugrohrdruck und einem Ist-Saugrohrdruck abhängt

Durch diese erfindungsgemäße Brennkraftmaschine wird in ähnlich vorteilhafter Weise wie bei dem zuvor dargestellten erfindungsgemäßen Verfahren erreicht, dass der Übergang von der ersten Betriebsart, dem Homogenbetrieb, in die zweite Betriebsart, dem Schichtbetrieb, ohne einen für den Fahrer des Kraftfahrzeugs spürbaren Momentenruck erfolgt.

Von besonderer Bedeutung ist die Realisierung des erfindungsgemäßen Verfahrens in der Form einer Brennkraftmaschine, insbesondere für ein Kraftfahrzeug. Hierbei sind Mittel zur Durchführung der Schritte des zuvor beschriebenen Verfahrens vorgesehen.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM.

Weitere Merkmale, Anwendungsmöglichkeiten und Vorteile der Erfindung ergeben sich aus der nachfolgenden Beschreibung von Ausführungsbeispielen der Erfindung, die in den nachfolgenden Figuren dargestellt sind.

### Beschreibung eines Ausführungsbeispiels

Figur 1 zeigt eine erfindungsgemäße Brennkraftmaschine,
Figur 2 zeigt den zeitlichen Verlauf eines Zündwinkels,
Figur 3 zeigt den zeitlichen Verlauf eines Drehmoments und
Figur 4 zeigt ein Ausführungsbeispiel des erfindungsgemäßen Verfahrens.

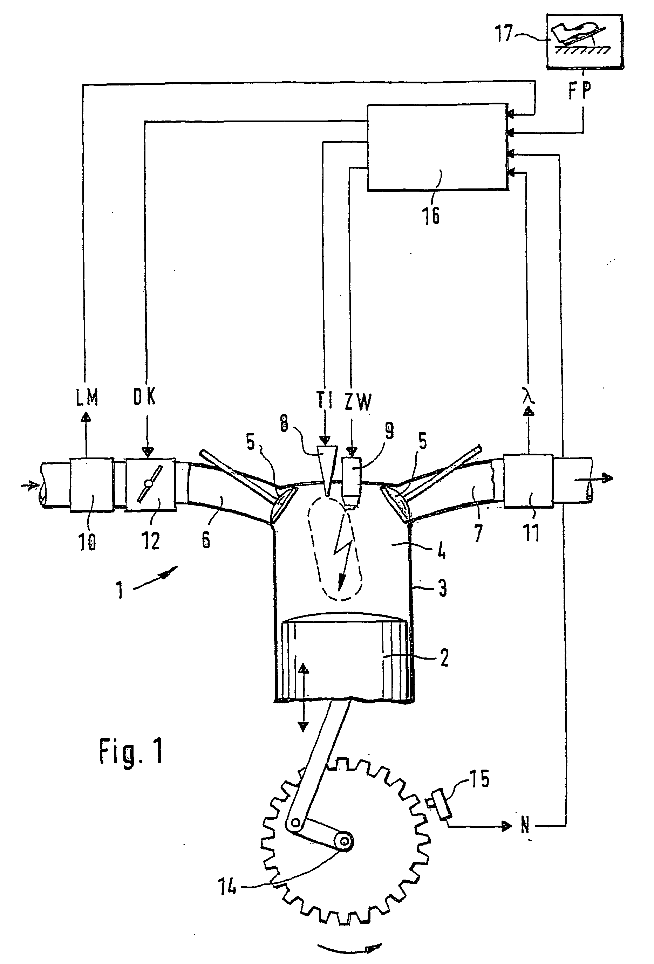

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des Weiteren sind mit dem Brennraum 4 ein mit einem Signal TI ansteuerbares Einspritzventil 8 und eine mit einem Signal ZW ansteuerbare Zündkerze 9 verbunden. Die Signale TI und ZW werden hierbei von einem Steuergerät 16 an das Einspritzventil 8 bzw. die Zündkerze 9 übertragen.

Das Ansaugrohr 6 ist mit einem Luftmassensensor 10 und das Abgasrohr 7 mit einem Lambdasensor 11 versehen. Der Luftmassensensor 10 misst die Luftmasse der dem Ansaugrohr 6 zugeführten Frischluft und erzeugt in Abhängigkeit davon ein Signal LM. Der Lambdasensor 11 misst den Sauerstoffgehalt des Abgases in dem Abgasrohr 7 und erzeugt in Abhängigkeit davon ein Signal Lambda. Die Signale des Luftmassensensors 10 und des Lambdasensors 11 werden dem Steuergerät 16 zugeführt.

In dem Ansaugrohr 6 ist eine Drosselklappe 12 untergebracht, deren Drehstellung mittels eines Signals DK einstellbar ist.

In einer ersten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im Wesentlichen gleichmäßig/homogen verteilt. Danach wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

In einer zweiten Betriebsart, dem Schichtbetrieb der Brennkraftmaschine 1, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird.

Im Schichtbetrieb wie auch im Homogenbetrieb wird durch den angetriebenen Kolben eine Kurbelwelle 14 in eine Drehbewegung versetzt, über die letztendlich die Räder des Kraftfahrzeugs angetrieben werden. Auf der Kurbelwelle 14 ist ein Zahnrad angeordnet, dessen Zähne von einem unmittelbar gegenüber angeordneten Drehzahlsensor 15 abgetastet werden. Der Drehzahlsensor 15 erzeugt ein Signal, aus dem die Drehzahl n der Kurbelwelle 14 ermittelt wird und übermittelt dieses Signal n an das Steuergerät 16.

Die im Schichtbetrieb und im Homogenbetrieb von dem Einspritzventil 8 in den Brennraum eingespritzte Kraftstoffmasse wird von dem Steuergerät 16 insbesondere im Hinblick auf einen geringen Kraftstoffverbrauch und/oder eine geringe Schadstoffentwicklung gesteuert und/oder geregelt. Auch die erfindungsgemäße Festlegung der Zündwinkel ZW erfolgt in dem Steuergerät 16. Zu diesem Zweck ist das Steuergerät 16 mit einem Mikroprozessor versehen, der in einem Speichermedium Programmcode abgespeichert hat, der dazu geeignet ist, die gesamte erfindungsgemäße Steuerung und/oder Regelung der Brennkraftmaschine 1 durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambdasensor 11 und dem Drehzahlsensor 15 verbunden. Des Weiteren ist das Steuergerät 16 mit einem Fahrpedalsensor 17 verbunden, der ein Signal FP erzeugt, das die Stellung eines von einem Fahrer betätigbaren Fahrpedals/Gaspedals und damit das von dem Fahrer angeforderte Moment angibt. Dieses Moment wird im Weiteren auch als Fahrerwunschmoment bezeichnet. Das Steuergerät 16 erzeugt Ausgangssignale, mit denen über Aktoren das Verhalten der Brennkraftmaschine 1 entsprechend der erwünschten Steuerung und/oder Regelung beeinflusst werden kann. Beispielsweise ist das Steuergerät 16 mit dem Einspritzventil 8, der Zündkerze 9 und der Drosselklappe 12 verbunden und erzeugt die zu deren Ansteuerung erforderlichen Signale TI, ZW und DK. Weiterhin koordiniert eine Funktion im Steuergerät das vom Fahrer des Kraftfahrzeugs angeforderte Fahrerwunschmoment mit den weiteren vorliegenden Momentenanforderungen, z.B. von einer Fahrdynamikregelung, zu einem koordinierten Gesamtmoment. Das koordinierte Gesamtmoment ist somit das relevante Sollmoment, das von der Brennkraftmaschine erzeugt werden soll.

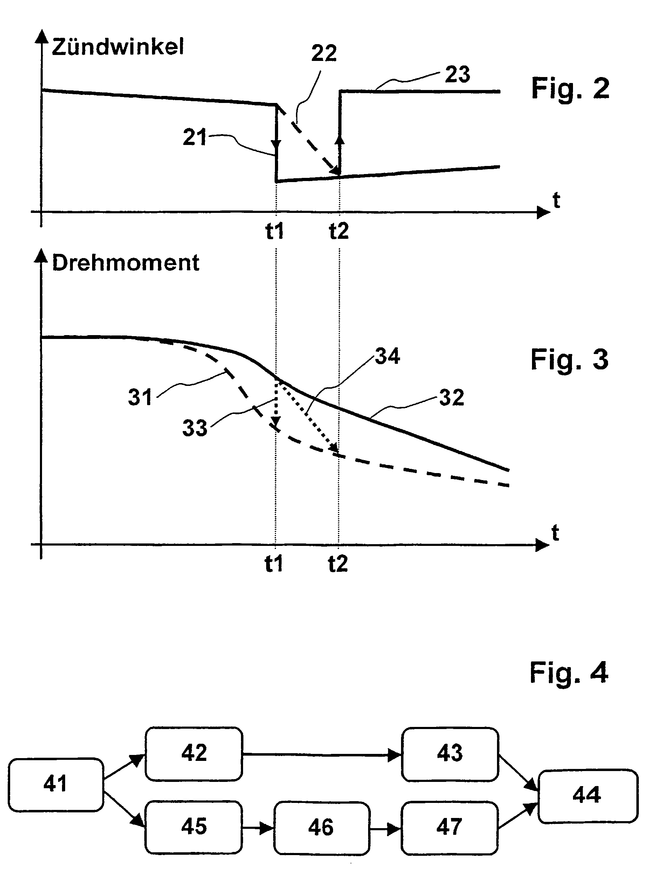

Figur 2 zeigt den zeitlichen Verlauf eines Zündwinkels. Hierbei ist in der Waagerechten die Zeitachse t dargestellt. In der Senkrechten sind Zündwinkel bzw. Zündzeitpunkte aufgetragen. Eine erste Kurve 21 stellt den zeitlichen Zündwinkelverlauf dar, der sich bei einem Verfahren gemäß dem Stand der Technik ergeben würde. Der mit 22 gekennzeichnete Verlauf stellt den Verlauf dar, der sich durch die Anwendung des erfindungsgemäßen Verfahrens ergibt. Auf der Zeitachse sind zwei explizite Zeitpunkte t1 und t2 aufgetragen, wobei t1 den Beginn der der Umschaltung von der homogenen in die geschichtete Betriebsart direkt vorgelagerten Vorbereitungsphase darstellt und die Zeitdifferenz von t1 bis t2 die Übergangsphase des Zündwinkels darstellt. Zum Zeitpunkt t2 findet dann die (harte) Umschaltung der Betriebsart (von Homogen- auf Schichtbetrieb) statt, wobei zum Zeitpunkt t2 ein Zündwinkelsprung auf Kennlinie 23, auf den neuen Schichtzündwinkel, erfolgt, der erfahrungsgemäß deutlich früher liegt als der Homogenzündwinkel. Da im Schichtbetrieb jedoch das Motormoment nicht über den Zündzeitpunkt, welcher fest ist (Kennlinie 23 weist einen konstanten Wert auf), sondern über die eingespritzte Kraftstoffmenge bestimmt wird, muß aus diesem Zündwinkelsprung kein Momentensprung folgen. Die Zeitpunkte t1 und t2 entsprechen den Zeitpunkten t1 und t2, die auch in der folgenden Figur 3 dargestellt sind. Dieser Zusammenhang wird auch durch die gestrichelten, senkrechten Verbindungslinien zwischen den Figuren 2 und 3 verdeutlicht.

Figur 3 zeigt zeitliche Verläufe von Drehmomenten. Hierbei ist auf der waagerechten Achse, korrespondierend zu Figur 2, die Zeit t aufgetragen, während die senkrechte Achse Drehmomente darstellt. Auch hier wird vorausgesetzt, dass zum Zeitpunkt t1 die Umschaltung in die zweite Betriebsart, den Schichtbetrieb, eingeleitet wird, woran sich eine Übergangsphase bis zum Zeitpunkt t2, dem eigentlichen (harten) Umschaltzeitpunkt, anschließt. Die Drehmomentkennlinie 31 entspricht hierbei dem Fahrerwunschmoment, das der Fahrer des Kraftfahrzeugs über das Fahrpedal 17 vorgibt. Die Kennlinie 32 entspricht dem Drehmoment, das aus der realen Luftfüllung im Saugrohr im Homogenbetrieb bei Lambda=1 und nicht freigegebenem Zündwinkel resultiert bzw. nach der Umschaltung resultieren würde. Hierbei wird beim Verlauf der Kennlinie 32 vorausgesetzt, dass der Zündwinkel freigegeben ist, das bedeutet, dass die Motorsteuerung den Zündwinkel bzw. den Zündzeitpunkt frei bestimmen kann. Beim Verlauf der Kennlinie 32 wird weiterhin vorausgesetzt, dass der Zündwinkel weiter entsprechend dem Homogenbetrieb eingestellt werden würde und daß der Zündwinkel bis zum Zeitpunkt t1 nicht freigegeben wird. Wäre der Zündwinkel immer frei, könnte das Soll-Moment 31 näherungsweise ruckfrei realisiert werden. Da im normalen Fahrbetrieb der Zündwinkel jedoch nicht freigegeben werden kann (beispielsweise aus Laufruhe- und Verbrauchsgründen), würde es zum Zeitpunkt der Freigabe (t1) zum Zündwinkel- und damit zum Momentensprung kommen. Die erfindungsgemäße Anpassung/Filterung des Zündwinkels erfolgt ausschließlich in der Vorbereitungsphase, also noch im Homogenbetrieb während des Zeitraums von t1 bis t2.

Da bei einem gattungsgemäßen Verfahren zum Betreiben einer Brennkraftmaschine eines Kraftfahrzeugs das von der Brennkraftmaschine erzeugte Moment in der ersten Betriebsart (Homogenbetrieb) im Wesentlichen von der dem Brennraum zugeführten Luftmenge abhängt, ist das von der Brennkraftmaschine abgegebene Moment proportional zur vorhandenen Luftfüllung im Saugrohr 6.

Insbesondere in den Fahrsituationen, in denen der Fahrer des Kraftfahrzeugs das Fahrpedal 17 schnell entlastet, das Fahrerwunschmoment also schnell abnimmt, wie es in Figur 3 dargestellt ist, ergibt sich zwischen dem Fahrerwunschmoment und dem Drehmoment, das der vorhandenen Luftfüllung im Saugrohr 6 entspricht, eine Differenz, die sich erst nach einer gewissen Ausgleichsphase zu Null ergibt. Dieser Ausgleich, dass also die Differenz zwischen den Drehmomentkurven 31 und 32 zu Null wird, ist in der Darstellung nach Figur 3 nicht gezeigt. Es ist in Figur 3 jedoch erkennbar, dass sich am rechten Rand der Darstellung, also mit fortschreitender Zeit t, die Drehmomentkurven 31 und 32 nahezu annähern. Mit weiter fortschreitender Zeit würde sich diese Differenz zu Null ergeben.

Befindet sich das Kraftfahrzeug im Homogenbetrieb, so bewegt sich das Drehmoment zunächst auf der Drehmomentkurve 32. Wird zum Zeitpunkt t1 die Umschaltung auf den Schichtbetrieb eingeleitet, so springt das Drehmoment entsprechend der Kurve 33 auf die Drehmomentkurve 31, weil bei gattungsgemäßen Brennkraftmaschinen in der Regel bei Umschaltungen aus dem Homogenbetrieb zur Vorbereitung derselben der Zündwinkel im Homogenbetrieb freigegeben wird, um absolute Gleichheit des Drehmomentes in beiden Betriebsarten, also vor und nach der Umschaltung, gewährleisten zu können. In dem in Figur 3 dargestellten Beispiel kommt es somit zu einem Sprung des Zündwinkels zum Zeitpunkt t1. Hintergrund ist, daß im normalen Fahrbetrieb in der homogenen Betriebsart der Brennungskraftmaschine der Zündwinkel nicht freigegeben ist, um unnötige Wirkungsgradeinbußen zu vermeiden. Der Zündwinkel wird jedoch, zum Angleich des Drehmomentes der alten Betriebsart an das in der nach der Umschaltung in der neuen Betriebsart zu erwartende Drehmoment, während der der Umschaltung direkt vorgelagerten Vorbereitungsphase freigegeben. Besteht zum Zeitpunkt der Freigabe des Zündwinkels in der alten Betriebsart ein Fahrerwunschmoment, das kleiner ist als das momentane reale Moment, folgt ein Zündwinkel- und damit ein Momentensprung, da das kleinere Sollmoment nach Freigabe des Zündwinkels unmittelbar eingestellt wird.

Der Momentensprung 33 hat für den Fahrer des Kraftfahrzeugs einen spürbaren Momentenruck zur Folge, der dadurch vermieden werden kann, dass der Zündwinkel entsprechend der Kurve 22 und somit auch das Drehmoment entsprechend der Kurve 34 derart angepaßt wird, dass es in dem Zeitraum von t1 bis t2 zu einem stetigen Übergang des Zündwinkels bzw. des Drehmomentes kommt.

Die in der Vorbereitungsphase (t1 bis t2) zur Umschaltung vorgenommene Zündwinkelfreigabe entspricht praktisch einer Umschaltung der Zündwinkelberechnung von einem Kennfeld für die erste Betriebsart auf eine momentenbasierte Berechnung auf Basis eines anderen Kennfeldes. Auf Basis dieses anderen Kennfeldes wird der Zündwinkel in der Vorbereitungsphase von t1 bis t2 durch einen Korrekturwert (46) angepaßt. Die momentenbasierte Berechnung wird insbesondere für schnelle Momenteneingriffe angewendet. Hierbei wird von einer kennfeldbasierten (Zündwinkel nicht freigegeben) Berechnung vor t1 auf eine momentenbasierte (Zündwinkel freigegeben) Berechnung im Zeitraum von t1 bis t2 übergegangen. Im Anschluß an diese Vorbereitungsphase von t1 bis t1 erfolgt die eigentliche (harte) Umschaltung von der ersten (Homogenbetriebsart) auf die zweite (Schichtbetriebsart) Betriebsart.

Das in Figur 4 gezeigte Verfahren startet damit, dass in einem Schritt 41 überprüft wird, in welcher Betriebsart sich die Brennkraftmaschine des Kraftfahrzeugs befindet (Ist-Betriebsart) und in welche Betriebsart gewechselt werden soll (Soll-Betriebsart).

Im Rahmen dieses Ausführungsbeispiels stehen lediglich der Homogenbetrieb und der Schichtbetrieb zur Auswahl. In der Praxis können jedoch weitere Betriebsarten, wie beispielsweise der homogene Magerbetrieb, der Homogen-Schichtbetrieb oder auch die Betriebsart Schicht-Katheizen mit Doppeleinspritzung auftreten. Es ist dem Ermessen des Fachmanns überlassen, das erfindungsgemäße Verfahren entsprechend auf die weiteren möglichen Betriebsarten zu adaptieren.

Wird in Schritt 41 des Verfahrens festgestellt, dass sich die Brennkraftmaschine in der homogenen Betriebsart befindet und in eben dieser Betriebsart bleiben soll, wird zum Schritt 42 übergegangen, in dem in Abhängigkeit von der aktuellen Motordrehzahl und der aktuell bestimmten Kraftstoffmenge, die in den Brennraum eingespritzt werden soll (oder die angesaugte Luftmenge für den Homogen-Betrieb, wobei die Kraftstoffmenge bei Lambda=1 der Luftmenge entspricht), der entsprechende Zündwinkel für den Homogenbetrieb aus einem ersten adaptierbaren Kennfeld entnommen wird. Dieser in Schritt 42 aus dem Kennfeld entnommene Zündwinkel für den Homogenbetrieb wird in Schritt 43 entsprechend aktuell vorliegender Betriebsbedingungen korrigiert.

Im abschließenden Schritt 44 wird der Zündwinkel an die entsprechende Endstufe ausgegeben, die daraufhin die Zündkerze 9 nach Figur 1 entsprechend ansteuert.

Wird in Schritt 41 hingegen der Homogenbetriebsmodus als Ist-Betriebsart, jedoch der Schichtbetriebsmodus als Soll-Betriebsart der Brennkraftmaschine des Kraftfahrzeugs detektiert, so wird in Schritt 45 in Abhängigkeit von der aktuellen Motordrehzahl und der im Steuergerät 16 bestimmten Kraftstoffeinspritzmenge der Zündwinkel für den Homogenbetrieb aus dem ersten, derjenige für den Schichtbetrieb aus einem zweiten adaptierbaren Kennfeld entnommen.

Der für den Homogenbetrieb aus dem ersten Kennfeld entnommene Zündwinkel wird in Schritt 46 erfindungsgemäß korrigiert. Hierzu kann beispielsweise in dem Steuergerät 16 ein Kennfeld mit Zündwinkelkorrekturdaten abgelegt sein, wobei die Zündwinkelkorrekturdaten in dem Kennfeld in Abhängigkeit von der aktuellen Motordrehzahl und der Differenz aus Soll-Saugrohrdruck (im Homogenbetrieb) und gemessenen Saugrohrdruck (im Homogenbetrieb) abgelegt sind. Durch die Berücksichtigung der Differenz des Soll-Saugrohrdrucks und des tatsächlich gemessenen Saugrohrdrucks wird der Momentensprung 33 nach Figur 3 vermieden. Bei dieser Vorgehensweise wird der Korrekturfaktor dann zu Null, wenn der Soll-Saugrohrdruck und der gemessene Saugrohrdruck angeglichen sind. Die Korrektur des Zündwinkels in Schritt 46 kann multiplikativ, additiv oder nach Ermessen des zuständigen Fachmanns durchgeführt werden.

Alternativ kann in einem nicht erfindungsgemäßen Beispiel in Schritt 46 der Zündwinkel entsprechend einer Rampe oder einer anderen beliebigen Funktion derart korrigiert werden, dass sich ein stetiger Übergang des Zündwinkels in dem Zeitraum von t1 bis t2 ergibt. In diesem Fall ergibt sich ein Verlauf des Zündwinkels entsprechend Kurve 22 in Figur 2 mit entsprechendem Momentenverlauf nach Kurve 34 in Figur 3.

Im Anschluss an den Schritt 46 werden ebenso wie bereits oben beschrieben weitere Korrekturen des Zündwinkels in Schritt 47 vorgenommen, wobei der Zündwinkel im Schichtbetrieb nicht in dem Sinne flexibel ist. Die Gemischwolke muß dann gezündet werden, wenn sie an der Zündkerze vorbeiströmt. Wird der Zündzeitpunkt zu stark variiert, ist mit Fehlzündungen zu rechnen. Beispielsweise muß der für den Schichtbetrieb notwendige Zündwinkel in Abhängigkeit von der Abgasrückführrate (AGR-Rate) angepaßt, das heißt nach früh verstellt werden.

Nach Schritt 47 wird ebenfalls im Schritt 44 der bestimmte korrigierte Zündwinkel der Endstufe zur Ansteuerung der Zündkerze 9 zur Verfügung gestellt.

## Patentansprüche

1. Verfahren zum Betreiben einer Brennkraftmaschine (1) eines Kraftfahrzeugs,
- bei dem Kraftstoff direkt in einen Brennraum (4) eingebracht und mittels einer Zündeinrichtung (9) zu einem vorgebbaren Zündzeitpunkt (ZW) entflammt wird,
- wobei die Brennkraftmaschine (1) in wenigstens einer ersten und einer zweiten Betriebsart betrieben wird,
- wobei in der ersten Betriebsart ein Moment der Brennkraftmaschine (1) im Wesentlichen von einer dem Brennraum (4) zugeführten Luftmenge abhängt,
- wobei in der zweiten Betriebsart das Moment der Brennkraftmaschine (1) im Wesentlichen von der in den Brennraum eingebrachten Kraftstoffmenge (TI) abhängt,
- wobei der Zündzeitpunkt (ZW) in der ersten Betriebsart im Wesentlichen von einem aus einem ersten applizierbaren Kennfeld für die erste Betriebsart entnommenen Zündzeitpunkt abhängt und
- wobei der Zündzeitpunkt (ZW) in der zweiten Betriebsart im Wesentlichen von einem aus einem zweiten applizierbaren Kennfeld für die zweite Betriebsart entnommenen Zündzeitpunkt abhängt,
- wobei beim Übergang von der ersten in die zweite Betriebsart der Zündzeitpunkt (ZW) derart angepasst und/oder gefiltert wird, dass sich ein stetiger Übergang ergibt,
- wobei der Zündzeitpunkt (ZW) für die erste Betriebsart durch einen Korrekturwert (46) angepasst wird,
- **dadurch gekennzeichnet, dass** der Korrekturwert (46) im Wesentlichen von der Differenz aus einem Soll-Saugrohrdruck und einem Ist-Saugrohrdruck abhängt.

2. Verfahren nach Anspruch 1, **dadurch gekennzeichnet, dass** der Zündzeitpunkt (ZW) derart angepasst und/oder gefiltert wird, dass sich ein stetiger Verlauf des Zündzeitpunkts (ZW) in der dem eigentlichen Umschaltvorgang direkt vorgelagerten Phase (t1 bis t2) ergibt.

3. Brennkraftmaschine (1) eines Kraftfahrzeugs,
- mit wenigstens einem Brennraum (4),
- mit wenigstens einem Einspritzmittel (8), um Kraftstoff direkt in den Brennraum (4) einzubringen,
- mit wenigstens einer dem Brennraum (4) zugeordneten Zündeinrichtung (9),
- mit Mitteln, um die Brennkraftmaschine (1) in wenigstens einer ersten und einer zweiten Betriebsart zu betreiben,
- mit Mitteln, um in der ersten Betriebsart ein Moment der Brennkraftmaschine (1) zu erzeugen, das im Wesentlichen von einer dem Brennraum (4) zugeführten Luftmenge abhängt,
- mit Mitteln, um in der zweiten Betriebsart ein Moment der Brennkraftmaschine (1) zu erzeugen, das im Wesentlichen von der in den Brennraum (4) eingebrachten Kraftstoffmenge abhängt,
- mit Mitteln, um den Zündzeitpunkt (ZW) in der ersten Betriebsart im Wesentlichen in Abhängigkeit von einem aus einem applizierbaren Kennfeld für die erste Betriebsart entnommenen Zündzeitpunkt zu bestimmen und
- mit Mitteln, um den Zündzeitpunkt (ZW) in der zweiten Betriebsart im Wesentlichen in Abhängigkeit von einem aus einem applizierbaren Kennfeld für die zweite Betriebsart entnommenen Zündzeitpunkt zu bestimmen,
- mit Mitteln, um beim Übergang von der ersten in die zweite Betriebsart den Zündzeitpunkt (ZW) derart anzupassen und/oder zu filtern, dass sich ein stetiger Übergang ergibt,
- wobei der Zündzeitpunkt (ZW) für die erste Betriebsart durch einen Korrekturwert (46) angepasst wird,
- **dadurch gekennzeichnet, dass** der Korrekturwert (46) im Wesentlichen von der Differenz aus einem Soll-Saugrohrdruck und einem Ist-Saugrohrdruck abhängt.

4. Computerprogramm mit Programmcode-Mitteln, um alle Schritte von jedem beliebigen der Ansprüche 1 und 2 durchzuführen, wenn das Programm auf einem Computer, insbesondere einem Steuergerät für eine Brennkraftmaschine, ausgeführt wird.

5. Computerprogrammprodukt mit Programmcode-Mitteln, die auf einem computerlesbaren Datenträger gespeichert sind, um das Verfahren nach jedem beliebigen der Ansprüche 1 und 2 durchzuführen, wenn das Programmprodukt auf einem Computer, insbesondere einem Steuergerät für eine Brennkraftmaschine, ausgeführt wird.

## Claims

1. Method of operating an internal combustion engine (1) of a motor vehicle,
- in which fuel is introduced directly into a combustion chamber (4) and is ignited at a predetermined ignition point (ZW) by means of an ignition device (9),
- the internal combustion engine (1) being operated in at least a first and a second mode,
- a torque of the internal combustion engine (1) in the first mode varying substantially as a function of a quantity of air delivered to the combustion chamber (4),
- the torque of the internal combustion engine (1) in the second mode varying substantially as a function of the quantity of fuel (TI) introduced into the combustion chamber,
- the ignition point (ZW) in the first mode varying substantially as a function of an ignition point derived from a first applicable characteristics map for the first mode,
- the ignition point (ZW) in the second mode varying substantially as a function of an ignition point derived from a second applicable characteristics map for the second mode,
- the ignition point (ZW) in the transition from the first to the second mode being adjusted and/or filtered in such a way that a smooth transition results,
- the ignition point (ZW) for the first mode being adjusted by a correction value (46),
- **characterized in that** the correction value (46) varies substantially as a function of the difference between a set inlet manifold pressure and an actual inlet manifold pressure.

2. Method according to Claim 1, **characterized in that** the ignition point (ZW) is adjusted and/or filtered in such a way that a smooth profile for ignition point (ZW) results in the phase (t1 to t2) immediately preceding the actual switching sequence.

3. Internal combustion engine (1) of a motor vehicle,
- having at least one combustion chamber (4),
- having at least one injection means (8) for introducing fuel directly into the combustion chamber (4),
- having at least one ignition device (9) assigned to the combustion chamber (4),
- having means for operating the internal combustion engine (1) in at least a first and a second mode,
- having means for generating a torque of the internal combustion engine (1) in the first mode which varies substantially as a function of a quantity of air delivered to the combustion chamber (4),
- having means for generating a torque of the internal combustion engine (1) in the second mode which varies substantially as a function of the quantity of fuel introduced into the combustion chamber (4),
- having means for determining the ignition point (ZW) in the first mode substantially as a function of an ignition point derived from an applicable characteristics map for the first mode,
- having means for determining the ignition point (ZW) in the second mode substantially as a function of an ignition point derived from an applicable characteristics map for the second mode,
- having means for adjusting and/or filtering the ignition point (ZW) in the transition from the first to the second mode in such a way that a smooth transition results,
- the ignition point (ZW) for the first mode being adjusted by a correction value (46),
- **characterized in that** the correction value (46) varies substantially as a function of the difference between a set inlet manifold pressure and an actual inlet manifold pressure.

4. Computer program having program code means for performing all steps of either of Claims 1 or 2, when the program is executed on a computer, in particular a control unit for an internal combustion engine.

5. Computer program product having program code means, which are stored on a machine-readable data carrier, for performing the method according to either of Claims 1 or 2, when the program product is run on a computer, in particular a control unit for an internal combustion engine.

## Revendications

1. Procédé de gestion d'un moteur à combustion interne (1) d'un véhicule, selon lequel
- on introduit le carburant directement dans une chambre de combustion (4) et on l'enflamme à l'aide d'une installation d'allumage (9), à un instant d'allumage prédéfini (ZW),
- le moteur à combustion interne (1) fonctionnant au moins selon un premier et un second mode de fonctionnement,
- dans le premier mode de fonctionnement, le couple fourni par le moteur à combustion interne (1) dépend principalement de la quantité d'air dans la chambre de combustion (4),
- dans le second mode de fonctionnement, le couple fourni par le moteur à combustion interne (1) dépend principalement de la quantité de carburant (TI) introduite dans la chambre de combustion,
- l'instant d'allumage (ZW) pour le premier mode de fonctionnement dépend principalement de l'instant d'allumage pris dans un premier champ de caractéristiques, applicable, pour le premier mode de fonctionnement et
- l'instant d'allumage (ZW) du second mode de fonctionnement dépend principalement d'un instant d'allumage pris dans un second champ de caractéristiques, applicable, pour le second mode de fonctionnement,
- le passage du premier au second mode de fonctionnement adaptant et/ou filtrant l'instant d'allumage (ZW) pour avoir un passage continu,
- l'instant d'allumage (ZW) du premier mode de fonctionnement étant adapté par une valeur de correction (46),
**caractérisé en ce que**
la valeur de correction (46) dépend principalement de la différence entre une pression de consigne dans la tubulure d'admission et une pression réelle dans la tubulure d'admission.

2. Procédé selon la revendication 1,
**caractérisé en ce que**
l'instant d'allumage (ZW) est adapté et/ou filtré pour avoir un passage continu de l'évolution de l'instant d'allumage (ZW) dans la phase (t1 jusqu'à t2) qui précède directement l'opération de commutation proprement dite.

3. Moteur à combustion interne (1) d'un véhicule automobile comprenant
- au moins une chambre de combustion (4),
- au moins un moyen d'injection (8) pour injecter du carburant directement dans la chambre de combustion (4),
- au moins une installation d'allumage (9) associée à la chambre de combustion (4),
- des moyens pour faire fonctionner le moteur à combustion interne (1) au moins selon le premier mode de fonctionnement et un second mode de fonctionnement,
- des moyens pour générer par le moteur (1), un couple dans le premier mode de fonctionnement qui dépend principalement de la quantité d'air fournie à la chambre de combustion (4),
- des moyens pour générer un couple par le moteur (1) dans le second mode de fonctionnement, ce couple dépendant principalement de la quantité de carburant introduite dans la chambre de combustion (4),
- des moyens pour déterminer l'instant d'allumage (ZW) dans le premier mode de fonctionnement principalement en fonction d'un instant d'allumage prélevé dans un champ de caractéristiques applicable au premier mode de fonctionnement et
- des moyens pour déterminer l'instant d'allumage (ZW) dans le second mode de fonctionnement principalement en fonction d'un champ de caractéristiques applicable au second mode de fonctionnement,
- des moyens pour adapter l'instant d'allumage (ZW) et le passage du premier vers le second mode de fonctionnement et/ou filtrer ce passage pour une transition continue,
- l'instant d'allumage (ZW) du premier mode de fonctionnement étant adapté par une valeur de correction (46),
**caractérisé en ce que**
la valeur de correction (46) dépend principalement de la différence entre une pression de consigne dans la tubulure d'admission et une pression réelle dans la tubulure d'admission.

4. Programme d'ordinateur comportant des moyens de code programme pour exécuter toutes les étapes sur lesquelles est enregistré un support de programme que peut lire l'ordinateur, pour exécuter le procédé selon l'une quelconque des revendications 1 et 2 si le programme est exécuté sur un ordinateur, notamment un appareil de commande d'un moteur à combustion interne.

5. Produit programme d'ordinateur comportant des moyens de codes de programmes enregistrés sur un support de données lisible par un ordinateur pour effectuer le procédé selon l'une des revendications 1 et 2 lorsque le produit programme est exécuté par un ordinateur, notamment un appareil de commande d'un moteur à combustion interne.
